# FASCICULE DE BREVET EUROPEEN

(11) **EP 4 295 731 B1**
(45) Date de publication et mention de la délivrance du brevet: **20.05.2026**
(21) Numéro de dépôt: 23178576.7
(22) Date de dépôt: 12.06.2023
(51) Int. Cl.: A47J 31/44

(54) **DISPOSITIF DE MOUSSAGE DE LAIT POURVU D'UN DISPOSITIF DE RÉGLAGE DE DÉBIT D'AIR**
MILCHSCHÄUMVORRICHTUNG MIT EINER LUFTSTROMEINSTELLVORRICHTUNG
MILK FROTHING DEVICE HAVING AN AIR FLOW CONTROL DEVICE

(30) Priorité: 14.06.2022 FR 2205747
(43) Date de publication de la demande: 27.12.2023
(73) Titulaire: SEB S.A., 69130 Ecully (FR)
(72) Inventeur: DOS SANTOS, Quentin, 69134 ECULLY CEDEX (FR); MORIN, Gilles, 69134 ECULLY CEDEX (FR)
(74) Mandataire: SEB Développement

(56) Documents cités:
- EP-A1- 2 896 332
- DE-U1- 202009 014 114

## Description

### Domaine technique

La présente invention concerne le domaine des machines à café automatiques, et plus particulièrement le domaine des dispositifs de moussage de lait destinés à coopérer avec des machines à café automatiques.

### Etat de la technique

Le document WO2012/151782 divulgue un dispositif de moussage de lait comportant une chambre de mélange munie d'un orifice de sortie, un orifice d'entrée de vapeur, un conduit d'écoulement principal reliant l'orifice d'entrée de vapeur à la chambre de mélange, un conduit d'amenée de lait relié au conduit d'écoulement principal, un conduit d'amenée d'air relié au conduit d'écoulement principal, et un dispositif de réglage de débit d'air configuré pour régler un débit d'air s'écoulant dans le conduit d'amenée d'air.

Le conduit d'écoulement principal est plus particulièrement configuré de telle sorte qu'un écoulement de vapeur dans le conduit d'écoulement principal depuis l'orifice d'entrée de vapeur et jusque la chambre de mélange génère une dépression dans le conduit d'amenée de lait et une dépression dans le conduit d'amenée d'air et entraîne une aspiration de lait et d'air dans le conduit d'écoulement principal.

Le dispositif de réglage de débit d'air comporte une partie de support ; un organe de réglage de débit supporté par la partie de support et monté mobile par rapport à la partie de support selon une direction de déplacement, l'organe de réglage de débit étant configuré pour occuper une pluralité de positions de réglage décalées les unes des autres selon la direction de déplacement ; et un élément d'étanchéité délimitant en partie un passage d'écoulement d'air ayant une section de passage qui varie en fonction de la position occupée par l'organe de réglage de débit.

Une telle configuration du dispositif de réglage de débit d'air permet à un utilisateur d'adapter la consistance de la mousse de lait obtenue en fonction de ses souhaits. L'utilisateur peut par exemple régler le débit d'air introduit dans la chambre de mélanger afin d'obtenir une mousse de lait plus ou moins ferme ou aérée.

Toutefois, en cas de retrait de l'organe de réglage de débit ou d'un desserrage trop important de ce dernier, la quantité d'air admise dans la chambre de mélange peut s'avérer trop importante, et conduire à l'obtention d'une mousse de lait trop aérée et/ou pourvue de bulles de grands diamètres, et donc ayant une consistance inappropriée.

Un dispositif de moussage du lait est divulgué par EP2896332A1 et par DE202009014114U1.

### Résumé de l'invention

La présente invention vise à remédier à tout ou partie de ces inconvénients.

Le problème technique à la base de l'invention consiste notamment à fournir un dispositif de moussage de lait permettant l'obtention d'une mousse de lait ayant une consistance appropriée, tout en pouvant être aisément nettoyé.

A cet effet, la présente invention concerne un dispositif de moussage de lait destiné à coopérer avec une machine à café automatique, le dispositif de moussage de lait comportant :
- une chambre de mélange munie d'un orifice de sortie,
- un orifice d'entrée d'eau chaude/vapeur,
- un conduit d'écoulement principal reliant l'orifice d'entrée d'eau chaude/vapeur à la chambre de mélange,
- un conduit d'amenée de lait relié au conduit d'écoulement principal,
- un conduit d'amenée d'air relié au conduit d'écoulement principal, et
- un dispositif de réglage de débit d'air configuré pour régler un débit d'air s'écoulant dans le conduit d'amenée d'air, le dispositif de réglage de débit d'air comportant :
   ∘ une partie de support,
   ∘ un organe de réglage de débit, tel qu'un bouton de réglage de débit, supporté par la partie de support et monté mobile, et par exemple monté mobile en translation ou encore selon un mouvement hélicoïdal, par rapport à la partie de support selon une direction de déplacement, l'organe de réglage de débit étant configuré pour occuper une pluralité de positions de réglage décalées les unes des autres selon la direction de déplacement,
   ∘ un élément d'étanchéité, par exemple annulaire, délimitant en partie un passage d'écoulement d'air ayant une section de passage qui varie en fonction de la position occupée par l'organe de réglage de débit.

La partie de support comporte un trou d'insertion, et le dispositif de réglage de débit d'air comporte en outre un organe de restriction de passage, tel qu'une goupille ou un pointeau, logé au moins en partie dans le trou d'insertion, le trou d'insertion et l'organe de restriction de passage délimitant un passage d'air calibré qui forme en partie le conduit d'amenée d'air et qui est configuré pour définir un débit d'air maximal dans le conduit d'amenée d'air.

La présence d'un tel passage d'air calibré, qui définit un débit d'air maximal dans le conduit d'amenée d'air, permet d'éviter l'admission d'une quantité d'air trop importante dans la chambre de mélange, et donc l'obtention d'une mousse de lait qui soit trop aérée et/ou pourvue de bulles de grands diamètres.

De plus, une telle configuration du passage d'air calibré permet un nettoyage aisé du dispositif de moussage de lait selon la présente invention, et en particulier du passage d'air calibré, en retirant l'organe de restriction de passage hors du trou d'insertion et en procédant ensuite au nettoyage notamment de l'organe de restriction de passage et du trou d'insertion.

En outre, une telle configuration du passage d'air calibré limite sensiblement les risques d'obstruction du passage d'air calibré puisque les mouvements successifs de l'organe de réglage de débit selon la direction de déplacement ont pour conséquence d'évacuer, hors du passage d'air calibré, des éventuelles particules, telles que des particules de poussière ou de lait, retenues dans le passage d'air calibré.

Ainsi, le dispositif de moussage de lait selon la présente invention peut être aisément nettoyé, tout en garantissant l'obtention d'une mousse de lait ayant une consistance appropriée.

Le dispositif de moussage de lait peut en outre présenter une ou plusieurs des caractéristiques suivantes, prises seules ou en combinaison.

Selon un mode de réalisation de l'invention, le trou d'insertion présente un diamètre supérieur à un millimètre, de préférence supérieur à 1,5 millimètres.

Selon un mode de réalisation de l'invention, le dispositif de réglage de débit d'air comporte au moins une ouverture d'admission d'air, le passage d'écoulement d'air étant configuré pour relier fluidiquement l'au moins une ouverture d'admission d'air au passage d'air calibré.

Selon un mode de réalisation de l'invention, l'au moins une ouverture d'admission d'air est définie par un jeu fonctionnel entre l'organe de réglage de débit et la partie de support.

Selon un mode de réalisation de l'invention, l'organe de réglage de débit est déplaçable entre une position de réglage maximale dans laquelle la section de passage du passage d'écoulement d'air est maximale, et une position de réglage minimale dans laquelle la section de passage du passage d'écoulement d'air est minimale, et par exemple nulle ou sensiblement nulle.

Selon un mode de réalisation de l'invention, l'organe de réglage de débit comporte une partie de manipulation configurée pour être manipulée par un utilisateur de manière à déplacer l'organe de réglage de débit selon la direction de déplacement.

Selon un mode de réalisation de l'invention, l'organe de restriction de passage comporte une portion d'extrémité inférieure qui est logée dans le trou d'insertion.

Selon un mode de réalisation de l'invention, l'organe de restriction de passage est allongé et s'étend selon une direction d'extension qui est sensiblement parallèle à la direction de déplacement.

Selon un mode de réalisation de l'invention, le passage d'air calibré est situé en aval du passage d'écoulement d'air.

Selon un mode de réalisation de l'invention, l'élément d'étanchéité est fixé à l'organe de réglage de débit. Un tel agencement de l'élément d'étanchéité permet un montage aisé du dispositif de réglage de débit d'air.

Selon un mode de réalisation de l'invention, l'organe de restriction de passage est solidaire en mouvement de l'organe de réglage de débit. Ainsi, l'organe de restriction de passage est monté mobile dans le trou d'insertion selon la direction de déplacement.

Selon un mode de réalisation de l'invention, la partie de support comporte une surface d'appui, par exemple prévue sur une face d'extrémité supérieure de la partie de support, qui est annulaire et contre laquelle est apte à être comprimé l'élément d'étanchéité.

Selon un mode de réalisation de l'invention, la partie de support comporte un évidement qui est ménagé dans la surface d'appui prévue sur la partie de support et qui délimite en partie le passage d'écoulement d'air. L'évidement peut par exemple s'étendre radialement par rapport à un axe central de la surface d'appui.

Selon un mode de réalisation de l'invention, le dispositif de moussage de lait comporte :
- une partie de mélange comprenant la chambre de mélange, l'orifice d'entrée d'eau chaude/vapeur et le conduit d'écoulement principal, et
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés.

Une telle configuration du dispositif de moussage de lait permet un nettoyage aisé de la chambre de mélange et du conduit d'écoulement principal.

Selon un mode de réalisation de l'invention, le dispositif de moussage de lait comporte un joint d'étanchéité agencé à une zone de jonction entre la partie de mélange et la partie de fermeture et s'étendant autour de la chambre de mélange et du conduit d'écoulement principal.

Selon un mode de réalisation de l'invention, la partie de support est fixée à la partie de fermeture.

Selon un mode de réalisation de l'invention, l'élément d'étanchéité et la partie de support délimitent le passage d'écoulement d'air.

Selon un mode de réalisation de l'invention, la partie de fermeture comporte le conduit d'amenée d'air, et la partie de mélange comporte le conduit d'amenée de lait. Un tel agencement du conduit d'amenée d'air et du conduit d'amenée de lait permet de limiter sensiblement les risques d'altération du conduit d'amenée d'air et du conduit d'amenée de lait par les protéines de lait contenues dans le lait s'écoulant dans le conduit d'amenée de lait et dans le conduit d'écoulement principal, et donc de garantir l'admission d'une quantité d'air et de lait maîtrisée dans la chambre de mélange.

Selon un mode de réalisation de l'invention, le dispositif de moussage de lait comporte un réservoir de lait comprenant une ouverture supérieure, la partie de mélange étant agencée au niveau de l'ouverture supérieure, et est par exemple logée au moins en partie dans le réservoir de lait.

Selon un mode de réalisation de l'invention, la partie de mélange et la partie de fermeture sont configurées pour fermer le réservoir de lait et pour être amovibles par rapport au réservoir de lait. En d'autres termes, la partie de mélange et la partie de fermeture forment un couvercle configuré pour fermer le réservoir de lait.

Selon un mode de réalisation de l'invention, le conduit d'amenée de lait comprend un passage d'écoulement calibré configuré pour définir un débit de lait prédéterminé dans le conduit d'amenée de lait. Ces dispositions permettent de garantir l'admission d'une quantité de lait prédéterminée dans la chambre de mélange, et donc l'obtention d'une mousse de lait ayant une consistance appropriée.

Selon un mode de réalisation de l'invention, le débit de lait prédéterminé défini par le passage d'écoulement calibré est indépendant du joint d'étanchéité. De ce fait, la quantité de lait admise dans le conduit d'écoulement principal est indépendante du joint d'étanchéité, et n'est pas susceptible d'être altérée par les protéines de lait s'écoulant dans le conduit d'écoulement principal.

Selon un mode de réalisation de l'invention, le conduit d'écoulement principal comporte une restriction de section formant un système d'aspiration de lait et d'air basé sur l'effet venturi. En d'autres termes, le conduit d'écoulement principal est configuré de telle sorte qu'un écoulement d'eau chaude/vapeur dans le conduit d'écoulement principal depuis l'orifice d'entrée d'eau chaude/vapeur et jusque la chambre de mélange génère une dépression dans le conduit d'amenée de lait et une dépression dans le conduit d'amenée d'air et entraîne une aspiration de lait et d'air dans le conduit d'écoulement principal. Une telle configuration du dispositif de moussage de lait permet de contrôler la quantité d'air et la quantité de lait admises dans la chambre de mélange, sans requérir la présence de moyens d'admission complexes et onéreux.

Selon un mode de réalisation de l'invention, le conduit d'amenée de lait débouche dans le conduit d'écoulement principal à proximité de la restriction de section.

Selon un mode de réalisation de l'invention, le conduit d'écoulement principal est entièrement délimité par la partie de mélange et la partie de fermeture. Ainsi, les protéines de lait, contenues dans le lait s'écoulant dans le conduit d'écoulement principal, ne sont pas susceptibles de déformer ce dernier, et donc d'avoir un impact sur la quantité d'air introduite dans la chambre de mélange.

Selon un mode de réalisation de l'invention, la partie de mélange comporte une face supérieure dans laquelle est ménagé le conduit d'écoulement principal et dans laquelle débouche la chambre de mélange.

Selon un mode de réalisation de l'invention, la partie de mélange comporte une rainure de réception qui est ménagée dans la face supérieure de la partie de mélange et dans laquelle est logé le joint d'étanchéité.

Selon un mode de réalisation de l'invention, la partie de mélange comporte une paroi d'appui qui s'étend autour de la chambre de mélange et du conduit d'écoulement principal et qui délimite en partie la rainure de réception, la paroi d'appui faisant saillie de la face supérieure de la partie de support et la partie de fermeture étant configurée pour prendre appui contre la paroi d'appui. La présence d'une telle paroi d'appui limite les risques de fuite de lait en direction du joint d'étanchéité, et donc les risques de dégradation de ce dernier par les protéines de lait contenues dans le lait s'écoulant dans le conduit d'écoulement principal.

Selon un mode de réalisation de l'invention, la partie de mélange et la partie de fermeture sont globalement circulaire et s'étendent sensiblement coaxialement lorsque la partie de fermeture occupe la position de fermeture.

Selon un mode de réalisation de l'invention, la partie de mélange comporte un canal d'admission d'air configuré pour être fermé par la partie de fermeture, le canal d'admission d'air reliant le conduit d'amenée d'air au conduit d'écoulement principal et le joint d'étanchéité s'étendant autour du canal d'admission d'air.

Selon un mode de réalisation de l'invention, le canal d'admission d'air est ménagé dans la face supérieure de la partie de mélange.

Selon un mode de réalisation de l'invention, le canal d'admission d'air débouche dans le conduit d'écoulement principal à proximité de la restriction de section.

Selon un mode de réalisation de l'invention, la zone de jonction est plane. Une telle configuration du dispositif de moussage de lait selon la présente invention permet un assemblage aisé du dispositif de moussage de lait.

Selon un mode de réalisation de l'invention, le conduit d'écoulement principal comporte :
- une première portion de conduit qui est située en amont de la restriction de section et qui s'étend jusque la restriction de section, la première portion de conduit présentant une section de passage qui diminue en direction de la restriction de section, et
- une deuxième portion de conduit qui est située en aval de la restriction de section et qui s'étend depuis la restriction de section, la deuxième portion de conduit présentant une section de passage qui augmente en direction de la chambre de mélange.

Selon un mode de réalisation de l'invention, le conduit d'écoulement principal est configuré pour permettre un premier mélange de la vapeur, du lait et de l'air provenant respectivement de l'orifice d'entrée d'eau chaude/vapeur, du conduit d'amenée de lait et du canal d'admission d'air, avant leur arrivée dans la chambre de mélange.

Selon un mode de réalisation de l'invention, la chambre de mélange est du type cyclonique et s'étend verticalement, le conduit d'écoulement principal débouchant dans une partie supérieure de la chambre de mélange et l'orifice de sortie étant situé dans une partie inférieure de la chambre de mélange. Une telle configuration de la chambre de mélange favorise le mélange de l'air, du lait et de l'eau chaude ou de la vapeur d'eau introduits dans la chambre de mélange.

Selon un mode de réalisation de l'invention, le conduit d'écoulement principal débouche tangentiellement dans la chambre de mélange. Une telle configuration du conduit d'écoulement principal favorise le mélange de l'air, du lait et de l'eau chaude ou de la vapeur d'eau introduits dans la chambre de mélange.

Selon un mode de réalisation de l'invention, la partie de mélange comporte un conduit de déversement de lait relié fluidiquement à l'orifice de sortie de la chambre de mélange et configuré pour être situé verticalement au-dessus d'un récipient, tel qu'une tasse.

Selon un mode de réalisation de l'invention, la partie de fermeture est configurée pour recouvrir la partie de mélange.

Selon un mode de réalisation de l'invention, le conduit d'amenée de lait comporte un tube d'aspiration de lait s'étendant verticalement et débouchant dans une partie inférieure du réservoir de lait.

Selon un mode de réalisation de l'invention, le passage d'écoulement calibré est situé en aval du tube d'aspiration de lait.

Selon un mode de réalisation de l'invention, le dispositif de moussage de lait comporte un système de maintien configuré pour maintenir la partie de fermeture en position de fermeture. Une telle configuration du système de maintien permet d'éviter un déplacement intempestif de la partie de fermeture vers la position d'ouverture.

Selon un mode de réalisation de l'invention, le système de maintien est configuré pour assurer une compression du joint d'étanchéité lorsque la partie de fermeture est en position de fermeture. Une telle configuration du système de maintien permet d'améliorer l'efficacité du joint d'étanchéité, et donc de limiter les risques de fuite de fluide au niveau du joint d'étanchéité.

Selon un mode de réalisation de l'invention, le système de maintien est configuré pour plaquer la partie de fermeture contre la partie de mélange lorsque la partie de fermeture est en position de fermeture, de manière à comprimer le joint d'étanchéité, et plus particulièrement une lèvre d'étanchéité du joint d'étanchéité.

Selon un mode de réalisation de l'invention, le système de maintien comporte une partie de verrouillage, tel qu'une bague de verrouillage, montée mobile entre une position de libération dans laquelle la partie de verrouillage autorise un déplacement de la partie de fermeture vers la position d'ouverture et une position de verrouillage dans laquelle la partie de verrouillage empêche un déplacement de la partie de fermeture vers la position d'ouverture. Une telle configuration du système de maintien permet à un utilisateur de pouvoir aisément immobiliser la partie de fermeture en position de fermeture.

Selon un mode de réalisation de l'invention, la partie de fermeture comporte une ouverture de remplissage et un volet mobile entre une position ouverte dans laquelle le volet libère au moins partiellement l'ouverture de remplissage et autorise une introduction de lait dans le réservoir de lait et une position fermée dans laquelle le volet obture au moins partiellement l'ouverture de remplissage.

Selon un mode de réalisation de l'invention, le système de maintien est configuré pour fixer de manière amovible, c'est-à-dire de manière temporaire et réversible, la partie de mélange et la partie de fermeture au réservoir de lait.

Selon un mode de réalisation de l'invention, la partie de verrouillage est annulaire et est mobile en rotation par rapport à la partie de fermeture autour d'un axe de rotation et entre la position de libération et la position de verrouillage.

Selon un mode de réalisation de l'invention, la partie de verrouillage comporte au moins un organe de fixation, tel qu'une rampe de fixation, configuré pour coopérer avec au moins un élément de fixation, tel qu'un ergot de fixation, configuré pour être solidaire en rotation de la partie de mélange, et par exemple prévu sur la partie de mélange ou sur le réservoir de lait, l'au moins un organe de fixation étant configuré pour coopérer avec l'au moins un élément de fixation lors d'une rotation de la partie de verrouillage de la position de libération vers la position de verrouillage de manière à déplacer la partie de verrouillage en direction de la partie de mélange, la partie de verrouillage étant configurée pour déplacer la partie de fermeture vers la partie de mélange lors d'une rotation de la partie de verrouillage de la position de libération vers la position de verrouillage.

Selon un mode de réalisation de l'invention, la partie de verrouillage et la partie de fermeture forment un sous ensemble.

Selon un mode de réalisation de l'invention, le dispositif de moussage de lait comporte un dispositif d'immobilisation configuré pour immobiliser en rotation la partie de mélange par rapport au réservoir de lait lorsque la partie de mélange est reçue dans le réservoir de lait.

La présente invention concerne en outre une machine à café automatique comportant un embout de sortie d'eau chaude/vapeur, une chaudière produisant de l'eau chaude et/ou de la vapeur pour alimenter ledit embout de sortie d'eau chaude/vapeur, et un dispositif de moussage de lait conforme à la présente invention, l'orifice d'entrée d'eau chaude/vapeur du dispositif de moussage de lait étant relié à l'embout de sortie d'eau chaude/vapeur.

Par machine à café automatique, on comprend que la machine à café comprend notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

### Brève description des figures

L'invention sera mieux comprise à l'aide de la description qui suit en référence aux dessins schématiques annexés représentant, à titre d'exemple non limitatif, une forme d'exécution de ce dispositif de moussage de lait .
[Fig 1] est une vue en perspective de dessus d'un dispositif de moussage de lait selon la présente invention.
[Fig 2] est une vue de dessus du dispositif de moussage de lait de la figure 1.
[Fig 3] est une vue en perspective, tronquée longitudinalement, du dispositif de moussage de lait de la figure 1.
[Fig 4] est une vue en perspective d'un joint d'étanchéité du dispositif de moussage de lait de la figure 1.
[Fig 5] est une vue partielle en perspective de dessus du dispositif de moussage de lait de la figure 1.
[Fig 6] est une vue en perspective de dessus d'une partie de mélange du dispositif de moussage de lait de la figure 1.
[Fig 7] est une vue partielle de dessus de la partie de mélange de la figure 6 équipée du joint d'étanchéité de la figure 4.
[Fig 8] est une vue partielle en perspective de dessus de la partie de mélange équipée du joint d'étanchéité de la figure 4.
[Fig 9] est une vue partielle en perspective, tronquée longitudinalement, du dispositif de moussage de lait de la figure 1.
[Fig 10] est une vue partielle en perspective, tronquée longitudinalement, de la partie de mélange de la figure 6.
[Fig 11] est une vue en perspective de dessus d'un sous-ensemble du dispositif de moussage de lait de la figure 1.
[Fig 12] est une vue en perspective de dessous du sous-ensemble de la figure 11.
[Fig 13] est une vue de dessous du sous-ensemble de la figure 11.
[Fig 14] est une vue partielle en perspective de dessus d'un dispositif de réglage de débit d'air du dispositif de moussage de lait de la figure 1.
[Fig 15] est une vue en perspective de dessus d'une partie de support et d'un organe de restriction de passage du dispositif de réglage de débit d'air de la figure 14.
[Fig 16] est une vue partielle en perspective de dessus du dispositif de réglage de débit d'air de la figure 14.
[Fig 17] est une vue en coupe de dessus du dispositif de réglage de débit d'air de la figure 14.
[Fig 18] est une vue en perspective d'une machine à café automatique équipée du dispositif de moussage de lait de la figure 1.

### Description détaillée

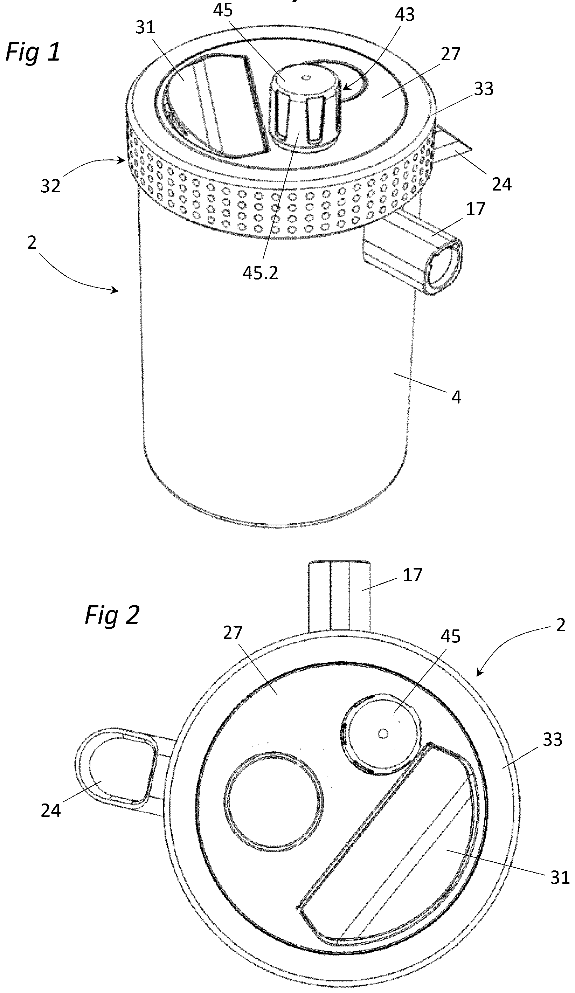

Les figures 1 à 18 représentent un dispositif de moussage de lait 2 destiné à coopérer avec une machine à café automatique 3.

Le dispositif de moussage de lait 2 comporte un réservoir de lait 4 délimitant un volume interne destiné à contenir du lait et comprenant une ouverture supérieure 5. Le réservoir de lait 4 peut par exemple avoir une forme globalement cylindrique, et présenter une section traversable circulaire. Toutefois, le réservoir de lait 4 pourrait également présenter une toute autre forme, et par exemple présenter une section traversable oblongue ou encore rectangulaire.

Le dispositif de moussage de lait 2 comporte en outre une partie de mélange 6 agencée au niveau de l'ouverture supérieure 5. La partie de mélange 6 comporte plus particulièrement un corps de mélange 7 pourvu d'une face supérieure 8 qui est globalement plane. Le corps de mélange 7 est configuré pour fermer partiellement le réservoir de lait 4 et pour être amovible par rapport au réservoir de lait 4. Le corps de mélange 7 peut par exemple comporter une portion de montage tubulaire 9 configurée pour être montée dans le réservoir de lait 4, et plus particulièrement pour être insérée dans le réservoir de lait 4 via l'ouverture supérieure 5 du réservoir de lait 4.

De façon avantageuse, le dispositif de moussage de lait 2 comporte un dispositif d'immobilisation configuré pour immobiliser en rotation le corps de mélange 7 par rapport au réservoir de lait 4 lorsque la portion de montage tubulaire 9 est reçue dans le réservoir de lait 4. Le dispositif d'immobilisation peut par exemple comporter des nervures d'immobilisation 11 prévues sur un bord périphérique supérieur du réservoir de lait 4 et répartis autour d'un axe central du réservoir de lait 4, et des rainures d'immobilisation 12 prévues sur le corps de mélange 7 et configurées pour coopérer respectivement avec les nervures d'immobilisation 11.

Le corps de mélange 7 comporte en outre une chambre de mélange 13 qui débouche dans la face supérieure 8 du corps de mélange 7 et qui est munie d'un orifice de sortie 14, et en outre un conduit d'écoulement principal 15 ménagé dans la face supérieure 8 du corps de mélange 7 et débouchant dans la chambre de mélange 13. Selon le mode de réalisation représenté sur les figures, la chambre de mélange 13 est du type cyclonique et s'étend verticalement, et le conduit d'écoulement principal 15 débouche tangentiellement dans la chambre de mélange 13. De façon avantageuse, le conduit d'écoulement principal 15 débouche dans une partie supérieure de la chambre de mélange 13, et par exemple dans un point haut de la chambre de mélange 13, et l'orifice de sortie 14 est situé dans une partie inférieure de la chambre de mélange 13, et est par exemple situé en un point bas de la chambre de mélange 13.

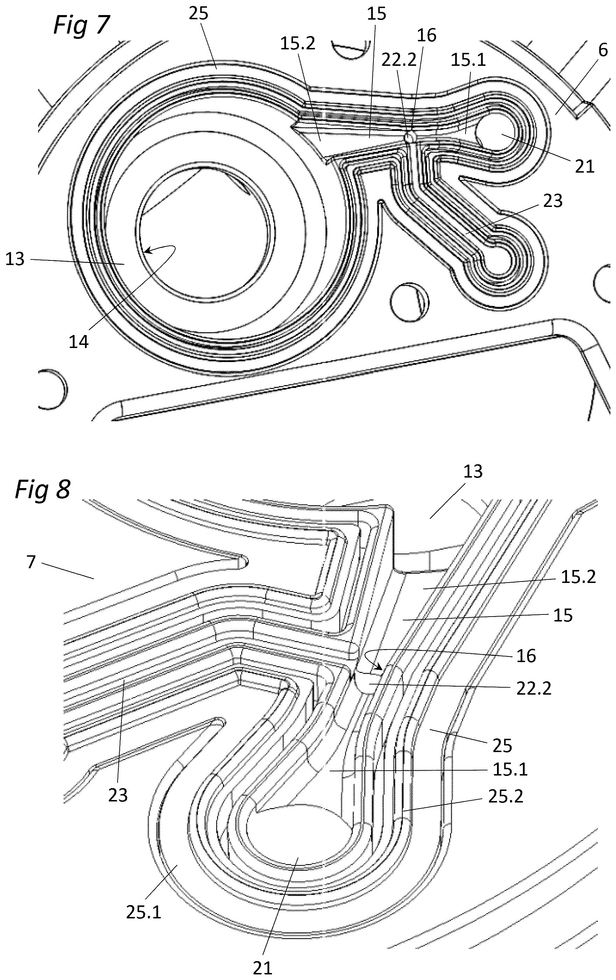

Comme montré plus particulièrement sur la figure 7, le conduit d'écoulement principal 15 comporte une restriction de section 16 située par exemple dans une portion centrale du conduit d'écoulement principal 15, une première portion de conduit 15.1 qui est située en amont de la restriction de section 16 et qui s'étend jusque la restriction de section 16, et une deuxième portion de conduit 15.2 qui est située en aval de la restriction de section 16 et qui s'étend depuis la restriction de section 16 et jusque la chambre de mélange 13. De façon avantageuse, la première portion de conduit 15.1 présente une section de passage qui diminue en direction de la restriction de section 16, et la deuxième portion de conduit 15.2 présente une section de passage qui augmente en direction de la chambre de mélange 13.

Le corps de mélange 7 comporte également un embout de raccordement 17 configuré pour être raccordé à un embout de sortie d'eau chaude/vapeur de la machine à café automatique 3, et plus particulièrement pour être relié fluidiquement à une chaudière qui équipe la machine à café automatique 3 et qui est configurée pour produire de l'eau chaude et/ou de la vapeur. De façon avantageuse, l'embout de raccordement 17 s'étend radialement par rapport à un axe central du corps de mélange 7, et est configuré pour s'étendre radialement par rapport à l'axe central du réservoir de lait 4.

Le corps de mélange 7 comporte de plus un orifice d'entrée d'eau chaude/vapeur 21 qui est relié fluidiquement à l'embout de raccordement 17 et qui débouche dans la première portion de conduit 15.1 et plus particulièrement à l'opposé de la chambre de mélange 13. Le conduit d'écoulement principal 15 est ainsi configuré pour relier fluidiquement l'orifice d'entrée d'eau chaude/vapeur 21 à la chambre de mélange 13, et pour permettre un écoulement d'eau chaude/vapeur dans le conduit d'écoulement principal 15 et jusque la chambre de mélange 13.

Le dispositif de moussage de lait 2 comporte également un conduit d'amenée de lait 22 relié fluidiquement au conduit d'écoulement principal 15, et donc configuré pour être relié fluidiquement à la chambre de mélange 13 via le conduit d'écoulement principal 15. Selon le mode de réalisation représenté sur les figures, la partie de mélange 6 comporte le conduit d'amenée de lait 22, et plus particulièrement le corps de mélange 7 et le conduit d'amenée de lait 22 sont réalisés d'un seul tenant.

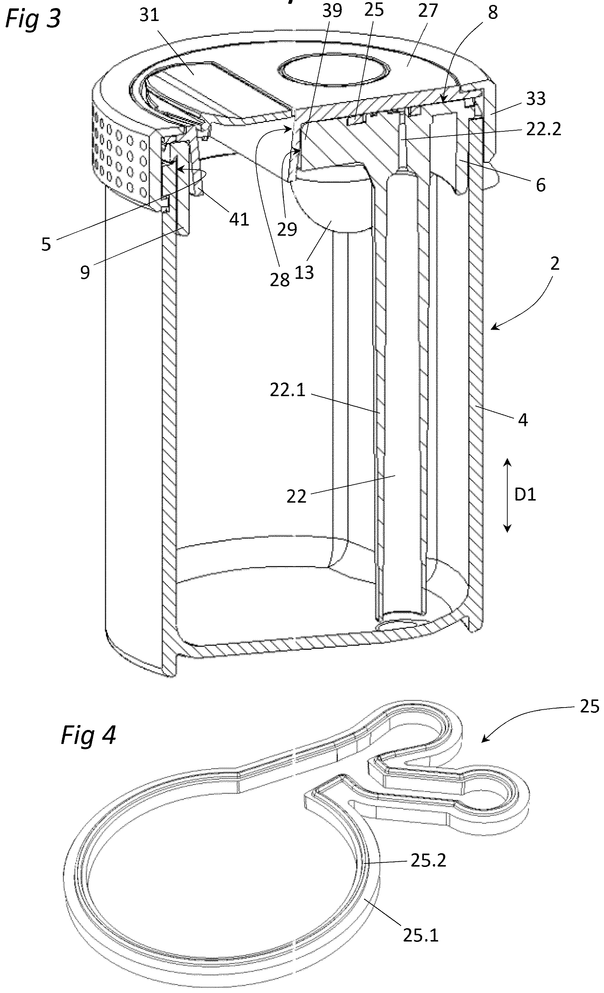

Comme montré plus particulièrement sur la figure 3, le conduit d'amenée de lait 22 comporte un tube d'aspiration de lait 22.1 s'étendant verticalement et débouchant dans une partie inférieure du réservoir de lait 4, et un passage d'écoulement calibré 22.2 situé en aval du tube d'aspiration de lait 22.1 et débouchant dans le conduit d'écoulement principal 15 au niveau de la restriction de section 16. Le passage d'écoulement calibré 22.2 est plus particulièrement configuré pour définir un débit de lait prédéterminé dans le conduit d'amenée de lait 22.

Selon le mode de réalisation représenté sur les figures, le corps de mélange 7 comporte en outre un canal d'admission d'air 23 qui est ménagé dans la face supérieure 8 du corps de mélange 7 et qui débouche dans le conduit d'écoulement principal 15 au niveau de la restriction de section 16. Le canal d'admission d'air 23 est ainsi configuré pour être relié fluidiquement à la chambre de mélange 13 via le conduit d'écoulement principal 15.

La restriction de section 16, décrite préalablement, induit une augmentation de la vitesse de la vapeur s'écoulant dans le conduit d'écoulement principal 15, ce qui génère une dépression dans le conduit d'amenée de lait 22 et dans le canal d'admission d'air 23. La restriction de section 16 est donc plus particulièrement configurée pour former un système d'aspiration de lait et d'air basé sur l'effet venturi. Le conduit d'écoulement principal 15 est ainsi configuré de telle sorte qu'un écoulement d'eau chaude/vapeur dans le conduit d'écoulement principal 15 depuis l'orifice d'entrée d'eau chaude/vapeur 21 et jusque la chambre de mélange 13 génère une dépression dans le conduit d'amenée de lait 22 et une dépression dans le canal d'admission d'air 23 et entraîne par conséquent une aspiration de lait et d'air dans le conduit d'écoulement principal 15 et écoulement du lait et de l'air aspirés jusque la chambre de mélange 13. De plus, la deuxième portion de conduit 15.2, qui présente une section de passage qui augmente en direction de la chambre de mélange 13, favorise un premier mélange de la vapeur, du lait et de l'air provenant respectivement de l'orifice d'entrée d'eau chaude/vapeur 21, du conduit d'amenée de lait 22 et du canal d'admission d'air 23, avant leur arrivée dans la chambre de mélange 13.

Le corps de mélange 7 comporte en outre un conduit de déversement de lait 24 relié fluidiquement à l'orifice de sortie 14 de la chambre de mélange 13, et configuré pour permettre un déversement de lait chaud et de mousse de lait dans un récipient, tel qu'une tasse, disposée verticalement en dessous du conduit de déversement de lait 24. De façon avantageuse, le conduit de déversement de lait 24 est configuré pour s'étendre radialement par rapport à l'axe central du réservoir de lait 4.

Comme montré plus particulièrement sur la figure 4 et 7, le dispositif de moussage de lait 2 comporte un joint d'étanchéité 25 s'étendant autour de la chambre de mélange 13, du conduit d'écoulement principal 15 et du canal d'admission d'air 23. A cet effet, le corps de mélange 7 comporte une rainure de réception 26 ménagée dans la face supérieure 8 du corps de mélange 7 et dans laquelle est logé le joint d'étanchéité 25.

Selon le mode de réalisation représenté sur les figures, le joint d'étanchéité 25 comporte un corps de joint 25.1 logé intégralement dans la rainure de réception 26, et une lèvre d'étanchéité 25.2 s'étendant le long du corps de joint 25.1 et faisant saillie hors de la rainure de réception 26. De façon avantageuse, le joint d'étanchéité 25 est continu et peut par exemple présenter une section constante.

Le dispositif de moussage de lait 2 comporte de plus une partie de fermeture 27 configurée pour recouvrir le corps de mélange 7 et pour prendre appui contre le corps de mélange 7. Le corps de mélange 7 peut éventuellement comporter une paroi d'appui 7.1 qui s'étend autour de la chambre de mélange 13 et du conduit d'écoulement principal 15 et qui délimite intérieurement la rainure de réception 26, la paroi d'appui 7.1 faisant saillie de la face supérieure 8 du corps de mélange 7 et la partie de fermeture 27 étant alors configurée pour prendre appui contre un bord supérieur de la paroi d'appui 7.1.

Comme montré sur la figure 3, la partie de fermeture 27 est globalement plane, et le joint d'étanchéité 25 est ainsi agencé à une zone de jonction entre la partie de mélange 6 et la partie de fermeture 27 qui est globalement plane. Selon le mode de réalisation représenté sur les figures, la partie de mélange 6 et la partie de fermeture 27 sont globalement circulaire et s'étendent sensiblement coaxialement avec l'axe central du réservoir de lait 4.

La partie de mélange 6 et la partie de fermeture 27 sont configurées pour fermer le réservoir de lait 4 et pour être amovibles par rapport au réservoir de lait 4. La partie de mélange 6 et la partie de fermeture 27 forment ainsi un couvercle configuré pour fermer le réservoir de lait 4.

Selon le mode de réalisation représenté sur les figures, la partie de fermeture 27 comporte une ouverture de remplissage 28 configurée pour être située en regard d'une ouverture de passage 29 prévue sur le corps de mélange 7 et débouchant dans le réservoir de lait 4, et un volet 31 mobile, et par exemple monté pivotant, entre une position ouverte dans laquelle le volet 31 libère au moins partiellement l'ouverture de remplissage 28 et autorise une introduction de lait dans le réservoir de lait 4 et une position fermée dans laquelle le volet 31 obture au moins partiellement l'ouverture de remplissage 28.

La partie de fermeture 27 est plus particulièrement montée mobile par rapport à la partie de mélange 6 entre une position de fermeture dans laquelle la partie de fermeture 27 ferme la chambre de mélange 13, le conduit d'écoulement principal 15 et le canal d'admission d'air 23, et une position d'ouverture dans laquelle la chambre de mélange 13, le conduit d'écoulement principal 15 et le canal d'admission d'air 23 sont ouverts et accessibles pour être nettoyés.

De façon avantageuse, le dispositif de moussage de lait 2 comporte également un système de maintien 32 configuré pour maintenir la partie de fermeture 27 en position de fermeture et pour assurer une compression du joint d'étanchéité 25 lorsque la partie de fermeture 27 est en position de fermeture. Le système de maintien 32 est plus particulièrement configuré pour plaquer la partie de fermeture 27 contre la face supérieure 8 du corps de mélange 7 lorsque la partie de fermeture 27 est en position de fermeture, de manière à comprimer le joint d'étanchéité 25, et plus particulièrement la lèvre d'étanchéité 25.2 du joint d'étanchéité 25. Selon le mode de réalisation représenté sur les figures, le système de maintien 32 est également configuré pour fixer de manière amovible, c'est-à-dire de manière temporaire et réversible, la partie de mélange 6 et la partie de fermeture 27 au réservoir de lait 4. Cependant, une telle fixation de la partie de mélange 6 et de la partie de fermeture 27 au réservoir de lait 4 pourrait être réalisé par un dispositif de liaison distinct du système de maintien 32.

Comme montré sur la figure 3, le système de maintien 32 comporte une partie de verrouillage 33, tel qu'une bague de verrouillage, montée mobile en rotation par rapport à la partie de fermeture 27 autour d'un axe de rotation A et entre une position de libération dans laquelle la partie de verrouillage 33 autorise un déplacement de la partie de fermeture 27 vers la position d'ouverture et une position de verrouillage dans laquelle la partie de verrouillage 33 empêche un déplacement de la partie de fermeture 27 vers la position d'ouverture. L'axe de rotation A est avantageusement sensiblement parallèle à, et par exemple colinéaire avec, l'axe central du réservoir de lait 4 lorsque la partie de mélange 6 est reçue dans le réservoir de lait 4 et que la partie de fermeture 27 occupe la position de fermeture.

Selon le mode de réalisation représenté sur les figures, la partie de fermeture 27 est configurée pour occuper une position intermédiaire située entre la position de fermeture et la position d'ouverture et dans laquelle la partie de fermeture 27 repose sur la lèvre d'étanchéité 25.2 du joint d'étanchéité 25 et est donc située en regard de la chambre de mélange 13 et du conduit d'écoulement principal 15 et est espacée de la partie de mélange 6, et le système de maintien 32 est configuré pour déplacer la partie de fermeture 27 de la position intermédiaire à la position de fermeture et en direction de la partie de mélange 6, et donc pour rapprocher la partie de fermeture 27 de la partie de mélange 6, lorsque la partie de verrouillage 33 est déplacée de la position de libération vers la position de verrouillage.

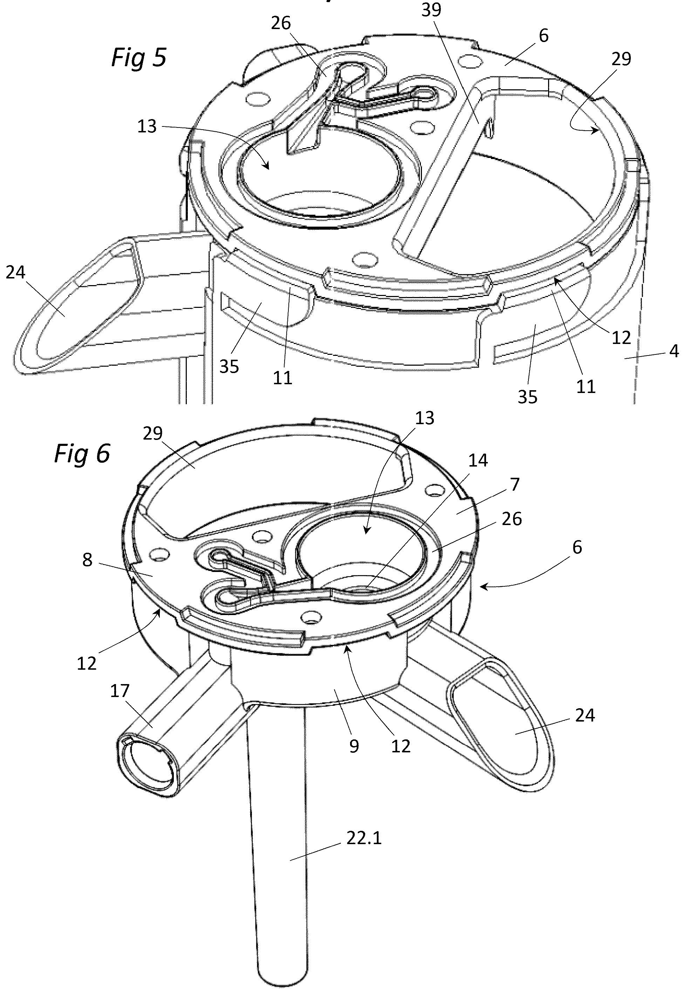

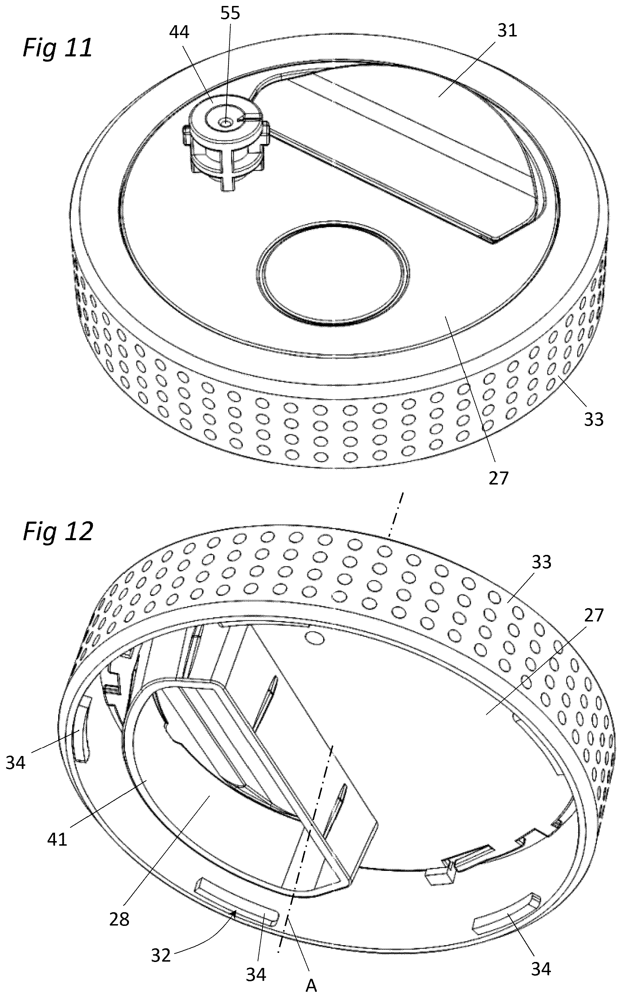

Comme montré sur les figures 5 et 12, le système de maintien 32 comporte en outre une pluralité d'organes de fixation 34, tels que des rampes de fixation ou rainures de fixation, prévus sur la partie de verrouillage 33 et répartis autour de l'axe de rotation A, et une pluralité d'éléments de fixation 35, tels que des ergots de fixation ou des encoches de fixation, prévus sur le réservoir de lait 4 et répartis autour de l'axe central du réservoir de lait 4. Les éléments de fixation 35 sont configurés pour coopérer respectivement avec les organes de fixation 34 prévus sur la partie de verrouillage 33 lors d'une rotation de la partie de verrouillage 33 de la position de libération vers la position de verrouillage, de manière à déplacer la partie de verrouillage 33 en direction de la partie de mélange 6. Les organes de fixation 34 et les éléments de fixation 35 peuvent par exemple former un système de fixation par baïonnettes ou du type vis-écrou. Selon le mode de réalisation représenté sur les figures, les organes de fixation 34 sont prévus sur une surface interne de la partie de verrouillage 33, et les éléments de fixation 35 sont prévus sur une surface externe du réservoir de lait 4.

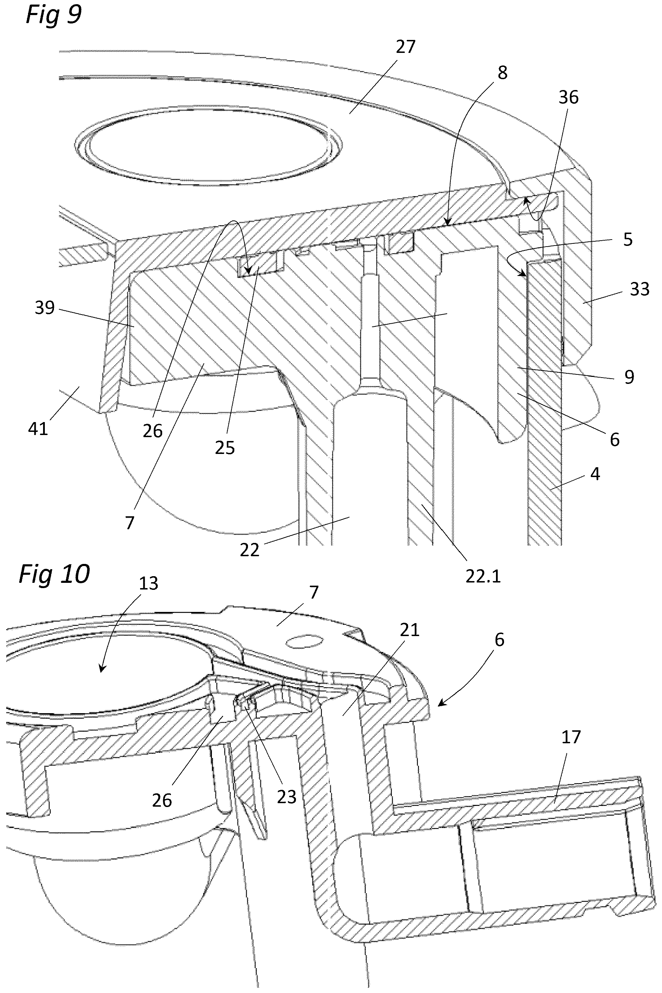

De façon avantageuse, la partie de verrouillage 33 comporte une face d'appui 36 (voir notamment la figure 9) qui s'étend transversalement à l'axe de rotation A et qui est configurée pour déplacer la partie de fermeture 27 vers la partie de mélange 6 et parallèlement à l'axe de rotation A lors d'une rotation de la partie de verrouillage 33 de la position de libération vers la position de verrouillage. La face d'appui 36 est plus particulièrement configurée pour glisser sur la partie de fermeture 27 lors d'une rotation de la partie de verrouillage 33 entre la position de libération et la position de verrouillage. La face d'appui 36 est annulaire et est configurée pour prend appui contre un bord périphérique de la partie de fermeture 27.

Selon le mode de réalisation représenté sur les figures, la partie de verrouillage 33 est montée de manière imperdable sur la partie de fermeture 27, de telle sorte que la partie de verrouillage 33 et la partie de fermeture 27 forment un sous ensemble indémontable.

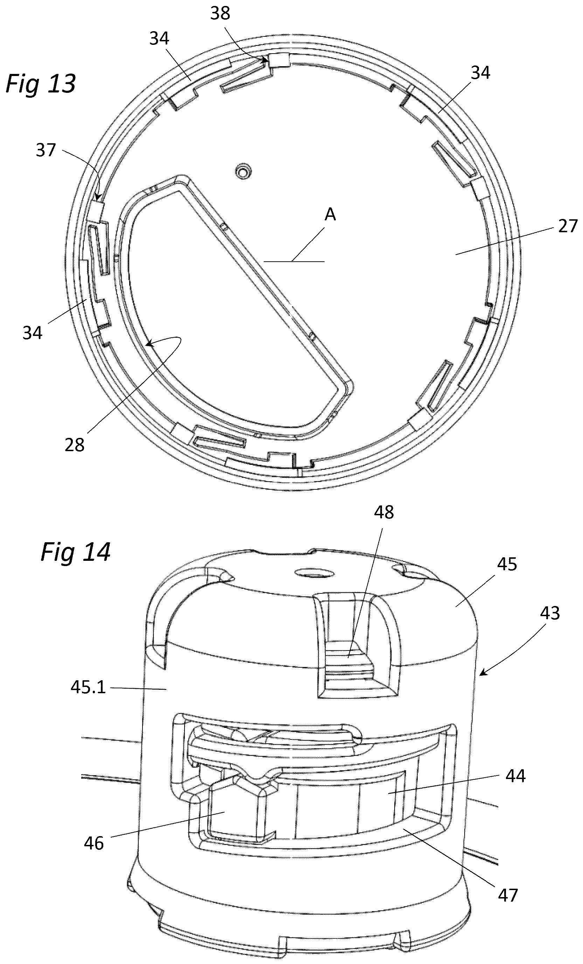

Comme montré plus particulièrement sur la figure 13, le dispositif de moussage de lait 2 comporte un dispositif de limitation de course angulaire configuré pour limiter une course angulaire de la partie de verrouillage 33 par rapport à la partie de fermeture 27. Le dispositif de limitation de course angulaire peut par exemple comporter une ou plusieurs première(s) butée(s) de fin course 37 prévue(s) sur la partie de verrouillage 33 et configurée(s) pour empêcher une rotation de la partie de verrouillage 33, dans un premier sens de rotation, au-delà de la position de libération, et une ou plusieurs deuxième(s) butée(s) de fin de course 38 prévue(s) sur la partie de verrouillage 33 et configurée(s) pour empêcher une rotation de la partie de verrouillage 33, dans un deuxième sens de rotation, au-delà de la position de verrouillage.

De façon avantageuse, le système de maintien 32 est également configuré pour conférer à la partie de fermeture 27 qu'un seul degré de liberté en translation selon une direction de translation D1, qui est par exemple perpendiculaire à la zone de jonction et donc parallèle à l'axe de rotation A, lorsque la partie de fermeture 27 est déplacée entre la position intermédiaire et la position de fermeture. A cet effet, le système de maintien 32 comporte un premier organe de guidage 39, tel qu'un organe de guidage en creux, et un deuxième organe de guidage 41, tel qu'un organe de guidage saillant, solidaires respectivement de la partie de mélange 6 et de la partie de fermeture 27 et configurés pour être montés coulissants l'un dans l'autre selon la direction de translation D1.

Les premier et deuxième organes de guidage 39, 41 présentent des sections transversales complémentaires et non circulaires, et sont configurés pour guider en translation la partie de fermeture 27 par rapport à la partie de mélange 6 et selon la direction de translation D1 lorsque la partie de fermeture 27 est déplacée entre la position intermédiaire et la position de fermeture. Selon le mode de réalisation représenté sur les figures, le premier organe de guidage 39 délimite l'ouverture de passage 29 prévue sur le corps de mélange 7, et le deuxième organe de guidage 41 fait saillie vers le bas depuis une face inférieure de la partie de fermeture 27 et est configuré pour être introduit dans l'ouverture de passage 29. Toutefois, selon une variante de réalisation de l'invention, les premier et deuxième organes de guidage 39, 41 pourraient être décalés latéralement par rapport à l'ouverture de remplissage 28 et l'ouverture de passage 29.

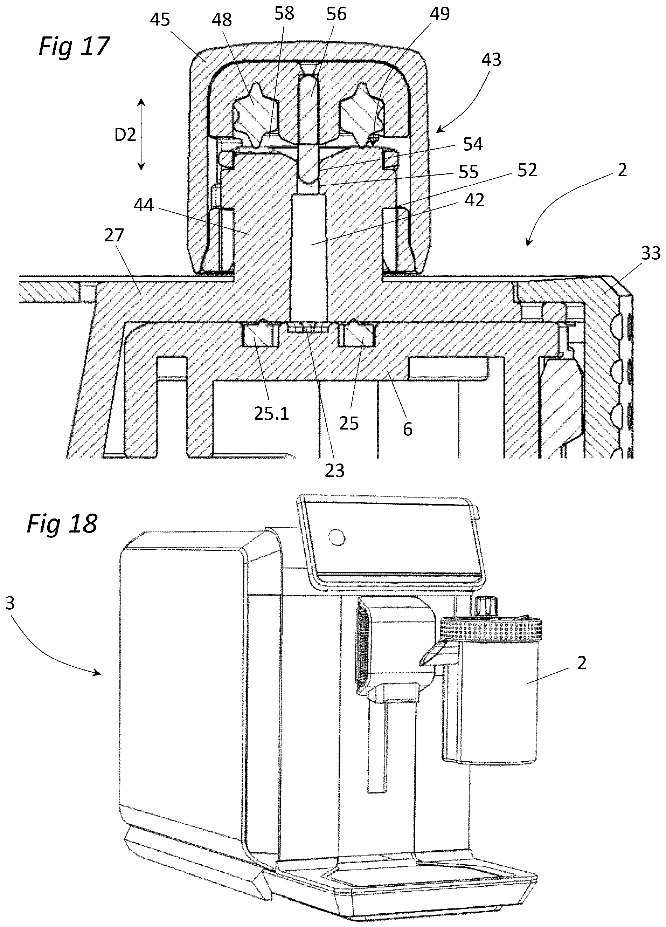

Comme montré plus particulièrement sur la figure 17, la partie de fermeture 27 comporte en outre un conduit d'amenée d'air 42 relié au conduit d'écoulement principal 15 via le canal d'admission d'air 23, et un dispositif de réglage de débit d'air 43 configuré pour régler un débit d'air s'écoulant dans le conduit d'amenée d'air 42. Cependant, selon une variante de réalisation de l'invention, la partie de mélange 6 pourrait être dépourvue du canal d'admission d'air 23, et le conduit d'amenée d'air 42 pourrait être relié directement au conduit d'écoulement principal 15.

Selon le mode de réalisation représenté sur les figures, le dispositif de réglage de débit d'air 43 comporte une partie de support 44 fixée à la partie de fermeture 27 et faisant saillie d'une face supérieure de la partie de fermeture 27, et un organe de réglage de débit 45, tel qu'un bouton de réglage de débit, supporté par la partie de support 44 et monté mobile, et par exemple monté mobile selon un mouvement hélicoïdal, par rapport à la partie de support 44 selon une direction de déplacement D2 qui peut par exemple être sensiblement verticale lorsque le dispositif de moussage de lait 2 repose sur une surface horizontale.

L'organe de réglage de débit 45 et la partie de support 44 peuvent par exemple s'étendre coaxialement l'un par rapport à l'autre, et la partie de support 44 peut par exemple comporter deux doigts de guidage 46 (voir la notamment figure 14) diamétralement opposés et montés coulissants respectivement dans deux rainures de guidage hélicoïdales 47 prévues sur l'organe de réglage de débit 45.

Selon le mode de réalisation représenté sur les figures, l'organe de réglage de débit 45 comporte une partie de réglage 45.1 qui est configurée pour coiffer la partie de support 44 et qui comporte une paroi supérieure recouvrant la partie de support 44 et une paroi périphérique ayant une forme globalement tubulaire et s'étendant autour de la partie de support 44. Comme montré plus particulièrement sur la figure 1, l'organe de réglage de débit 45 comporte en outre une partie de manipulation 45.2 solidaire de la partie de réglage 45.1 et configurée pour être manipulée par un utilisateur de manière à déplacer l'organe de réglage de débit 45 selon la direction de déplacement D2.

L'organe de réglage de débit 45 est configuré pour occuper une pluralité de positions de réglage décalées les unes des autres selon la direction de déplacement D2. De façon avantageuse, la direction de déplacement D2 est sensiblement parallèle à l'axe central du réservoir de lait 4 lorsque la partie de mélange 6 est reçue dans le réservoir de lait 4 et que la partie de fermeture 27 est en position de fermeture.

Le dispositif de réglage de débit d'air 43 comporte en outre un élément d'étanchéité 48 qui est annulaire et qui est fixé à l'organe de réglage de débit 45. Selon le mode de réalisation représenté sur les figures, la partie de support 44 comporte une surface d'appui 49, prévue sur une face d'extrémité supérieure de la partie de support 44, qui est annulaire et contre laquelle est apte à être comprimé l'élément d'étanchéité 48 en fonction de la position occupée par l'organe de réglage de débit 45.

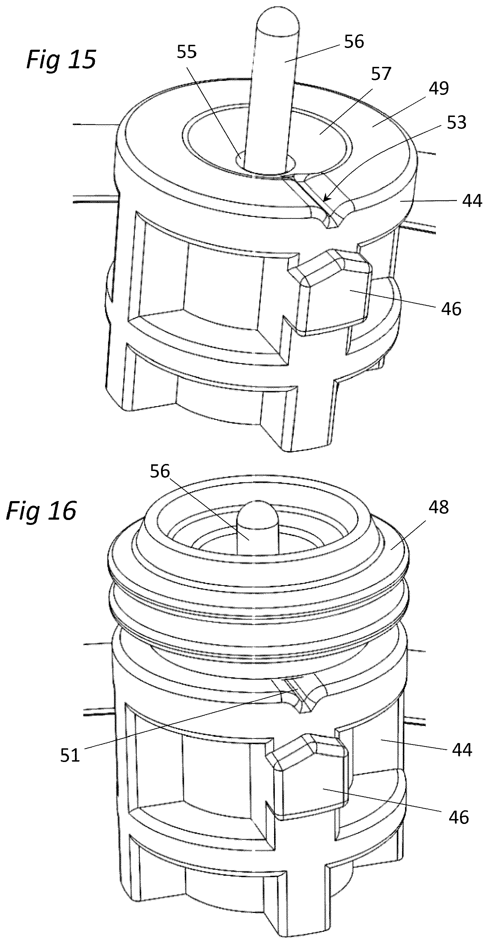

L'élément d'étanchéité 48 et la partie de support 44 sont configurés pour délimiter un passage d'écoulement d'air 51 (voir la figure 16) ayant une section de passage qui varie en fonction de la position occupée par l'organe de réglage de débit 45. Le passage d'écoulement d'air 51 est plus particulièrement configuré pour relier fluidiquement une ouverture d'admission d'air 52, définie par le dispositif de réglage de débit d'air 43, au conduit d'amenée d'air 42. Selon le mode de réalisation représenté sur les figures, l'ouverture d'admission d'air 52 est définie par un jeu fonctionnel entre l'organe de réglage de débit 45 et la partie de support 44.

L'organe de réglage de débit 45 est plus particulièrement déplaçable entre une position de réglage maximale dans laquelle la section de passage du passage d'écoulement d'air 51 est maximale, et une position de réglage minimale dans laquelle la section de passage du passage d'écoulement d'air 51 est minimale, et par exemple nulle ou sensiblement nulle.

Comme montré sur la figure 15, la partie de support 44 comporte un évidement 53 qui est ménagé dans la surface d'appui 49 et qui délimite en partie le passage d'écoulement d'air 51. L'évidement 53 peut par exemple s'étendre radialement par rapport à la direction de déplacement D2, et présenter une section transversale globalement en forme de V.

Comme montré plus particulièrement sur la figure 17, le conduit d'amenée d'air 42 comprend un passage d'air calibré 54 qui est situé en aval de l'organe de réglage de débit 45 et qui est configuré pour définir un débit d'air maximal dans le conduit d'amenée d'air 42.

Selon le mode de réalisation représenté sur les figures, la partie de support 44 comporte un trou d'insertion 55, qui peut par exemple présenter un diamètre supérieur à un millimètre et de préférence supérieur à 1,5 millimètres, orienté sensiblement parallèlement à la direction de déplacement D2, et le dispositif de réglage de débit d'air 43 comporte un organe de restriction de passage 56, tel qu'une goupille ou un pointeau de forme globalement cylindrique, ayant une portion d'extrémité inférieure qui logée dans le trou d'insertion 55. L'organe de restriction de passage 56 est solidaire en mouvement de l'organe de réglage de débit 45, et est donc monté mobile dans le trou d'insertion 55 selon la direction de déplacement D2. L'organe de restriction de passage 56 est allongé et s'étend selon une direction d'extension qui est parallèle à la direction de déplacement D2. Le trou d'insertion 55 et l'organe de restriction de passage 56 délimitent plus particulièrement le passage d'air calibré 54, de telle sorte que le passage d'air calibré 54 est annulaire.

Selon le mode de réalisation représenté sur les figures, la partie de support 44 comporte une cavité 57 qui débouche dans la face d'extrémité supérieure de la partie de support 44 et dans laquelle débouche le trou d'insertion 55. La cavité 57 et l'organe de réglage de débit 45 délimitent une chambre interne 58 configurée pour relier fluidiquement le passage d'écoulement d'air 51 au trou d'insertion 55.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif de moussage de lait (2) destiné à coopérer avec une machine à café automatique (3), le dispositif de moussage de lait (2) comportant :
- une chambre de mélange (13) munie d'un orifice de sortie (14),
- un orifice d'entrée d'eau chaude/vapeur (21),
- un conduit d'écoulement principal (15) reliant l'orifice d'entrée d'eau chaude/vapeur (21) à la chambre de mélange (13),
- un conduit d'amenée de lait (22) relié au conduit d'écoulement principal (15),
- un conduit d'amenée d'air (42) relié au conduit d'écoulement principal (15), et
- un dispositif de réglage de débit d'air (43) configuré pour régler un débit d'air s'écoulant dans le conduit d'amenée d'air (42), le dispositif de réglage de débit d'air (43) comportant :
∘ une partie de support (44),
∘ un organe de réglage de débit (45) supporté par la partie de support et monté mobile par rapport à la partie de support (44) selon une direction de déplacement (D2), l'organe de réglage de débit (45) étant configuré pour occuper une pluralité de positions de réglage décalées les unes des autres selon la direction de déplacement (D2),
∘ un élément d'étanchéité (48) délimitant en partie un passage d'écoulement d'air (51) ayant une section de passage qui varie en fonction de la position occupée par l'organe de réglage de débit (45),
**caractérisé en ce que** la partie de support (44) comporte un trou d'insertion (55), et **en ce que** le dispositif de réglage de débit d'air (43) comporte en outre un organe de restriction de passage (56) logé au moins en partie dans le trou d'insertion (55), le trou d'insertion (55) et l'organe de restriction de passage (56) délimitant un passage d'air calibré (54) qui forme en partie le conduit d'amenée d'air (42) et qui est configuré pour définir un débit d'air maximal dans le conduit d'amenée d'air (42).

2. Dispositif de moussage de lait (2) selon la revendication 1, dans lequel le passage d'air calibré (54) est situé en aval du passage d'écoulement d'air (51).

3. Dispositif de moussage de lait (2) selon la revendication 1 ou 2, dans lequel l'élément d'étanchéité (48) est fixé à l'organe de réglage de débit (45).

4. Dispositif de moussage de lait (2) selon l'une quelconque des revendications 1 à 3, dans lequel l'organe de restriction de passage (56) est solidaire en mouvement de l'organe de réglage de débit (45).

5. Dispositif de moussage de lait (2) selon l'une quelconque des revendications 1 à 4, dans lequel la partie de support (44) comporte une surface d'appui (49) qui est annulaire et contre laquelle est apte à être comprimé l'élément d'étanchéité (48).

6. Dispositif de moussage de lait (2) selon la revendication 5, dans lequel la partie de support (44) comporte un évidement (53) qui est ménagé dans la surface d'appui (49) prévue sur la partie de support (44) et qui délimite en partie le passage d'écoulement d'air (51).

7. Dispositif de moussage de lait (2) selon l'une quelconque des revendications 1 à 6, lequel comporte :
- une partie de mélange (6) comprenant la chambre de mélange (13), l'orifice d'entrée d'eau chaude/vapeur (21) et le conduit d'écoulement principal (15), et
- une partie de fermeture (27) mobile par rapport à la partie de mélange (6) entre une position de fermeture dans laquelle la partie de fermeture (27) ferme la chambre de mélange (13) et le conduit d'écoulement principal (15) et une position d'ouverture dans laquelle la chambre de mélange (13) et le conduit d'écoulement principal (15) sont ouverts et accessibles pour être nettoyés.

8. Dispositif de moussage de lait (2) selon la revendication 7, lequel comporte un joint d'étanchéité (25) agencé à une zone de jonction entre la partie de mélange (6) et la partie de fermeture (27) et s'étendant autour de la chambre de mélange (13) et du conduit d'écoulement principal (15).

9. Dispositif de moussage de lait (2) selon la revendication 7 ou 8, dans lequel la partie de support (44) est fixée à la partie de fermeture (27).

10. Dispositif de moussage de lait (2) selon l'une quelconque des revendications 7 à 9, dans lequel la partie de fermeture (27) comporte le conduit d'amenée d'air (42), et la partie de mélange (6) comporte le conduit d'amenée de lait (22).

11. Dispositif de moussage de lait (2) selon l'une quelconque des revendications 7 à 10, lequel comporte un réservoir de lait (4) comprenant une ouverture supérieure (5), la partie de mélange (6) étant agencée au niveau de l'ouverture supérieure (5).

12. Dispositif de moussage de lait (2) selon la revendication 11, dans lequel la partie de mélange (6) et la partie de fermeture (27) sont configurées pour fermer le réservoir de lait (4) et pour être amovibles par rapport au réservoir de lait (4).

13. Dispositif de moussage de lait (2) selon l'une quelconque des revendications 1 à 12, dans lequel le conduit d'amenée de lait (22) comprend un passage d'écoulement calibré (22.2) configuré pour définir un débit de lait prédéterminé dans le conduit d'amenée de lait (22).

14. Dispositif de moussage de lait (2) selon l'une quelconque des revendications 1 à 13, dans lequel le conduit d'écoulement principal (15) comporte une restriction de section (16) formant un système d'aspiration de lait et d'air basé sur l'effet venturi.

15. Dispositif de moussage de lait (2) selon l'une quelconque des revendications 1 à 14, dans lequel la chambre de mélange (13) est du type cyclonique et s'étend verticalement, le conduit d'écoulement principal (15) débouchant dans une partie supérieure de la chambre de mélange (13) et l'orifice de sortie (14) étant situé dans une partie inférieure de la chambre de mélange (13).

16. Machine à café automatique (3) comportant un embout de sortie d'eau chaude/vapeur, une chaudière produisant de l'eau chaude et/ou de la vapeur pour alimenter ledit embout de sortie d'eau chaude/vapeur, et un dispositif de moussage de lait (2) conforme à l'une quelconque des revendications 1 à 15, l'orifice d'entrée d'eau chaude/vapeur (21) du dispositif de moussage de lait (2) étant relié à l'embout de sortie d'eau chaude/vapeur.

## Patentansprüche

1. Milchaufschäumvorrichtung (2), die zur Zusammenarbeit mit einer automatischen Kaffeemaschine (3) vorgesehen ist, wobei die Milchaufschäumvorrichtung (2) Folgendes umfasst:
• eine Mischkammer (13) mit einer Austrittsöffnung (14),
• eine Heißwasser/Dampfeintrittsöffnung (21),
• ein Hauptströmungsrohr (15), das die Heißwasser/Dampfeintrittsöffnung (21) mit der Mischkammer (13) verbindet,
• ein Milchzufuhrrohr (22), das mit dem Hauptströmungsrohr (15) verbunden ist,
• ein Luftzufuhrrohr (42), das mit dem Hauptströmungsrohr (15) verbunden ist, und
• eine Vorrichtung zur Luftstromregelung (43), die konfiguriert ist, um einen Luftstrom durch das Luftzufuhrrohr (42) zu regulieren, wobei die Vorrichtung zur Luftstromregelung (43) Folgendes umfasst :
∘ einen Stützteil (44)
∘ ein Strömungsregelglied (45), das von dem Stützteil getragen wird und montiert ist, um mit Bezug auf den Stützteil (44) entlang einer Bewegungsrichtung (D2) bewegt zu werden, wobei das Strömungsregelglied (45) konfiguriert ist, um eine Vielzahl von Regelpositionen einzunehmen, die entlang der Bewegungsrichtung (D2) voneinander abweichen,
∘ ein Dichtungselement (48), das teilweise einen Luftströmungskanal (51) abgrenzt, dessen Querschnitt sich in Abhängigkeit von der Position des Strömungsregelglieds (45) ändert,
**dadurch gekennzeichnet, dass** der Stützteil (44) ein Einführungsloch (55) aufweist, und dass die Vorrichtung zur Luftstromregelung (43) weiterhin ein Strömungsbegrenzungsglied (56) umfasst, das zumindest teilweise in dem Einführungsloch (55) untergebracht ist, wobei das Einführungsloch (55) und das Strömungsbegrenzungsglied (56) einen kalibrierten Luftkanal (54) begrenzen, der teilweise das Luftzufuhrrohr (42) bildet und konfiguriert ist, um einen maximalen Luftstrom im Luftzufuhrrohr (42) zu definieren.

2. Milchaufschäumvorrichtung (2) gemäß Anspruch 1, wobei der kalibrierte Luftkanal (54) stromabwärts des Luftströmungskanals (51) angeordnet ist.

3. Milchaufschäumvorrichtung (2) gemäß Anspruch 1 oder 2, wobei das Dichtungselement (48) an dem Strömungsregelglied (45) befestigt ist.

4. Milchaufschäumvorrichtung (2) gemäß einem der Ansprüche 1 bis 3, wobei das Strömungsbegrenzungsglied (56) integral mit dem Strömungsregelglied (45) bewegbar ist.

5. Milchaufschäumvorrichtung (2) gemäß einem der Ansprüche 1 bis 4, wobei der Stützteil (44) eine ringförmige Stützfläche (49) umfasst, gegen die das Dichtungselement (48) eingedrückt werden kann.

6. Milchaufschäumvorrichtung (2) gemäß Anspruch 5, wobei der Stützteil (44) eine Vertiefung (53) umfasst, die in der Stützfläche (49) auf dem Stützteil (44) vorgesehen ist und teilweise den Luftströmungskanal (51) abgrenzt.

7. Milchaufschäumvorrichtung (2) gemäß einem der Ansprüche 1 bis 6, die Folgendes umfasst :
• einen Mischteil (6) mit der Mischkammer (13), der Heißwasser/Dampfeintrittsöffnung (21) und dem Hauptströmungsrohr (15), und
• einen Verschlussteil (27), der sich mit Bezug auf den Mischteil (6) zwischen einer Schließstellung, in der der Verschlussteil (27) die Mischkammer (13) und das Hauptströmungsrohr (15) schließt, und einer Offenstellung, in der die Mischkammer (13) und das Hauptströmungsrohr (15) geöffnet und zugänglich sind, um gereinigt zu werden, bewegt.

8. Milchaufschäumvorrichtung (2) gemäß Anspruch 7, die eine Dichtungsfuge (25) umfasst, die an einer Verbindungsstelle zwischen dem Mischteil (6) und dem Verschlussteil (27) angebracht ist und sich um die Mischkammer (13) und das Hauptströmungsrohr (15) erstreckt.

9. Milchaufschäumvorrichtung (2) gemäß Anspruch 7 oder 8, wobei der Stützteil (44) an dem Verschlussteil (27) befestigt ist.

10. Milchaufschäumvorrichtung (2) gemäß einem der Ansprüche 7 bis 9, wobei der Verschlussteil (27) das Luftzufuhrrohr (42) enthält, und der Mischteil (6) das Milchzufuhrrohr (22) umfasst.

11. Milchaufschäumvorrichtung (2) gemäß einem der Ansprüche 7 bis 10, die einen Milchtank (4) mit einer oberen Öffnung (5) umfasst, wobei der Mischteil (6) an der oberen Öffnung (5) angeordnet ist.

12. Milchaufschäumvorrichtung (2) gemäß Anspruch 11, wobei der Mischteil (6) und der Verschlussteil (27) konfiguriert sind, um den Milchtank (4) zu schließen und abnehmbar mit dem Milchtank (4) zu sein.

13. Milchaufschäumvorrichtung (2) gemäß einem der Ansprüche 1 bis 12, wobei das Milchzufuhrrohr (22) einen kalibrierten Strömungskanal (22.2) umfasst, der konfiguriert ist, um einen vorgegebenen Milchstrom im Milchzufuhrrohr (22) zu definieren.

14. Milchaufschäumvorrichtung (2) gemäß einem der Ansprüche 1 bis 13, wobei das Hauptströmungsrohr (15) eine Querschnittseinschränkung (16) umfasst, die ein Milch- und Luftansaugsystem basierend auf dem Venturi-Effekt bildet.

15. Milchaufschäumvorrichtung (2) gemäß einem der Ansprüche 1 bis 14, wobei die Mischkammer (13) eine Zyklonbauweise besitzt und sich vertikal erstreckt, wobei das Hauptströmungsrohr (15) in einen oberen Bereich der Mischkammer (13) mündet, und die Austrittsöffnung (14) in einem unteren Bereich der Mischkammer (13) angeordnet ist.

16. Automatische Kaffeemaschine (3) mit einer Heißwasser/Dampfauslassdüse, einem Boiler, der Heißwasser und/oder Dampf zur Versorgung der Heißwasser/Dampfauslassdüse erzeugt, und einer Milchaufschäumvorrichtung (2) gemäß einem der Ansprüche 1 bis 15, wobei die Heißwasser/Dampfeintrittsöffnung (21) der Milchaufschäumvorrichtung (2) mit der Heißwasser/Dampfauslassdüse verbunden ist.

## Claims

1. Milk frothing device (2) intended to cooperate with an automatic coffee machine (3), the milk frothing device (2) comprising:
• a mixing chamber (13) equipped with an outlet orifice (14),
• a hot water/steam inlet orifice (21),
• a main flow conduit (15) connecting the hot water/steam inlet orifice (21) to the mixing chamber (13),
• a milk supply conduit (22) connected to the main flow conduit (15),
• an air supply conduit (42) connected to the main flow conduit (15), and
• an air flow adjustment device (43) configured to regulate an air flow passing through the air supply conduit (42), the air flow adjustment device (43) comprising:
∘ a support part (44),
∘ a flow adjustment member (45) supported by the support part and movably mounted with respect to the support part (44) along a direction of movement (D2), the flow adjustment member (45) being configured to occupy a plurality of adjustment positions offset from one another along the direction of movement (D2),
∘ a sealing element (48) partially delimiting an air flow passage (51) having a cross-section that varies according to the position occupied by the flow adjustment member (45),
**characterized in that** the support part (44) comprises an insertion hole (55), and **in that** the air flow adjustment device (43) further comprises a passage restriction member (56) at least partially housed in the insertion hole (55), the insertion hole (55) and the passage restriction member (56) delimit a calibrated air passage (54) that partially forms the air supply conduit (42) and is configured to define a maximum air flow in the air supply conduit (42).

2. Milk frothing device (2) according to claim 1, wherein the calibrated air passage (54) is located downstream of the air flow passage (51).

3. Milk frothing device (2) according to claim 1 or 2, wherein the sealing element (48) is fixed to the flow adjustment member (45).

4. Milk frothing device (2) according to any one of claims 1 to 3, wherein the passage restriction member (56) is movable integrally with the flow adjustment member (45).

5. Milk frothing device (2) according to any one of claims 1 to 4, wherein the support part (44) comprises an annular support surface (49) against which the sealing element (48) is capable of being compressed.

6. Milk frothing device (2) according to claim 5, wherein the support part (44) comprises a recess (53) formed in the support surface (49) provided on the support part (44) and partially delimiting the air flow passage (51).

7. Milk frothing device (2) according to any one of claims 1 to 6, which comprises:
• a mixing part (6) comprising the mixing chamber (13), the hot water/steam inlet orifice (21), and the main flow conduit (15), and
• a closure part (27) movable with respect to the mixing part (6) between a closed position in which the closure part (27) seals the mixing chamber (13) and the main flow conduit (15) and an open position in which the mixing chamber (13) and the main flow conduit (15) are open and accessible for cleaning.

8. Milk frothing device (2) according to claim 7, comprising a sealing joint (25) arranged at a junction area between the mixing part (6) and the closure part (27) and extending around the mixing chamber (13) and the main flow conduit (15).

9. Milk frothing device (2) according to claim 7 or 8, wherein the support part (44) is fixed to the closure part (27).

10. Milk frothing device (2) according to any one of claims 7 to 9, wherein the closure part (27) comprises the air supply conduit (42), and the mixing part (6) comprises the milk supply conduit (22).

11. Milk frothing device (2) according to any one of claims 7 to 10, comprising a milk reservoir (4) with an upper opening (5), the mixing part (6) being arranged at the upper opening (5).

12. Milk frothing device (2) according to claim 11, wherein the mixing part (6) and the closure part (27) are configured to close the milk reservoir (4) and to be detachable from the milk reservoir (4).

13. Milk frothing device (2) according to any one of claims 1 to 12, wherein the milk supply conduit (22) comprises a calibrated flow passage (22.2) configured to define a predetermined milk flow in the milk supply conduit (22).

14. Milk frothing device (2) according to any one of claims 1 to 13, wherein the main flow conduit (15) comprises a section restriction (16) forming a milk and air suction system based on the venturi effect.

15. Milk frothing device (2) according to any one of claims 1 to 14, wherein the mixing chamber (13) is of the cyclonic type and extends vertically, the main flow conduit (15) opening into a top portion of the mixing chamber (13) and the outlet orifice (14) being located in a bottom portion of the mixing chamber (13).

16. Automatic coffee machine (3) comprising a hot water/steam outlet nozzle, a boiler producing hot water and/or steam to supply said hot water/steam outlet nozzle, and a milk frothing device (2) according to any one of claims 1 to 15, the hot water/steam inlet orifice (21) of the milk frothing device (2) being connected to the hot water/steam outlet nozzle.
